Europäisches Patentamt

(19) European Patent Office

Office européen des brevets

(11) Publication number: **0 096 507**
**B1**

(12) **EUROPEAN PATENT SPECIFICATION**

(45) Date of publication of patent specification: **28.03.90**

(21) Application number: **83302982.0**

(22) Date of filing: **24.05.83**

(51) Int. Cl.⁵: **B 29 C 67/14**

(54) **Automated fiber lay-up machine.**

(30) Priority: **27.05.82 US 382496**

(43) Date of publication of application:
**21.12.83 Bulletin 83/51**

(45) Publication of the grant of the patent:
**28.03.90 Bulletin 90/13**

(84) Designated Contracting States:
**DE FR GB IT NL SE**

(56) References cited:
**DE-A-3 040 838**
**US-A-3 380 675**
**US-A-3 775 219**
**US-A-3 810 805**

(73) Proprietor: **Lockheed Corporation**
**2555, North Hollywood Way**
**Burbank California 91520 (US)**

(72) Inventor: **Blad, Leiv Hamilton**
**6177 Costello Avenue**
**Van Nuys California 91401 (US)**

(74) Representative: **Boon, Graham Anthony et al**
**Elkington and Fife Beacon House 113 Kingsway**
**London, WC2B 6PP (GB)**

Courier Press, Leamington Spa, England.

EP 0 096 507 B1

## Description

The invention relates to the field of machines suitable for the fabrication of composite structures and, in particular, to a machine suitable for laying up fibrous materials.

In this era of rapidly rising labour costs and increasing disinterest in factory work, it has become a necessity to move toward automation of manufacturing processes. One of the more recent manufacturing processes utilizes composite materials in the form of dry fibers coated with wet resin to form reticulated structures. One such structure is illustrated in U.S. Patent No. 3,962,393 entitled "Method for Making A Hollow Laminated Article". This structure is generally formed by laying fibrous material, such as fiberglass, graphite or boron filaments, and organic resin, on a mandrel and then curing it by the application of heat and pressure.

In order to have an efficient automated lay-up process, it is necessary that the head laying the material move quickly and accurately over the surface on which the material is to be laid. Material laying heads typically used in prior art machines are shown in U.S. Patent No. 3,574,040 to Chitwood et al and U.S. Patent No. 3,775,219 to Karlson et al. In these machines, the material laying heads carry not only the mechanism for laying the material and dispensing the material to the material laying head. Thus the material laying heads must of necessity be bulky and weighty and are difficult to manoeuvre with rapidity and accuracy due to their weight and inertia.

In a preferred aspect thereof the present invention aims to provide an improved, automated, rapid and accurate fiber lay-up machine for the fabrication of reticulated structures, in which the laying head has a minimum of bulk and weight, and in which the laying head can be rapidly and accurately manoeuvred.

DE-A-3040838 discloses a fiber lay-up machine for laying up fibrous material on a lay-up tool comprising:

supply means for supplying said fibrous material, said supply means including a source of resin; fiber laying means coupled to said supply means and adapted to lay down resin impregnated fibrous material on said tool; carriage means adapted to carry said supply means and fiber laying means and having a selected number of degrees of freedom of movement to control the positions of said supply means and said fiber laying means; and means for moving said carriage means. It will be noted that the machine in DE-A-3040838 has a single degree of freedom of transverse movement independent of the supply means for supplying the fibrous material.

The present invention provides a machine of the type disclosed in DE-A-3040838, characterized in that the fiber laying means has two degrees of freedom of transverse movement independent of said supply means.

The lay-up machine preferably comprises an upper carriage which carries a fibrous material handling system, including the source of resin, and a lower carriage which carries the fiber laying means. Means are provided to move and control the motion of the upper and lower carriages. The movement of the upper carriage is slaved to the movement of the lower carriage to allow the fibrous material handling system to dispense the fibrous material to the fiber laying means. The fiber laying means can rotate to provide an extra degree of freedom and can also be independently moved normal to work surface. The resin is applied directly to the fiber laying means concomitant with the fibrous material, while the fiber laying means is adapted to lay the fibrous material flat on the work surface.

In the accompanying drawings:

Fig. 1 is a perspective view of am embodiment of the present invention.

Fig. 2 is a cross-sectional view taken along line 2-2 of Fig. 1.

Fig. 3 is a top plan view taken along line 3-3 of Fig. 2.

Fig. 4 is an enlarged cross-sectional view taken along line 4-4 of Fig. 1.

Fig. 5 is a plan view of a fiber laying head which can be used in the present invention.

Fig. 6 is a cross-sectional view of the fiber laying of Fig. 5 with the bottom portion rotated ninety degrees.

Fig. 7 is a top plan view of the fiber laying head of Fig. 5.

Figs. 8A and 8B are cross-sectional views of a fiber bundle which can be used in the present invention.

Fig. 9 is a cross-sectional view of the fiber laying head of Fig.6 taken along line 9-9 of Fig. 6.

Fig. 10 is a perspective view of a reticulated structure fabricated by the present invention.

Fig. 11 is a plan view of a portion of the machine shown in Fig. 1.

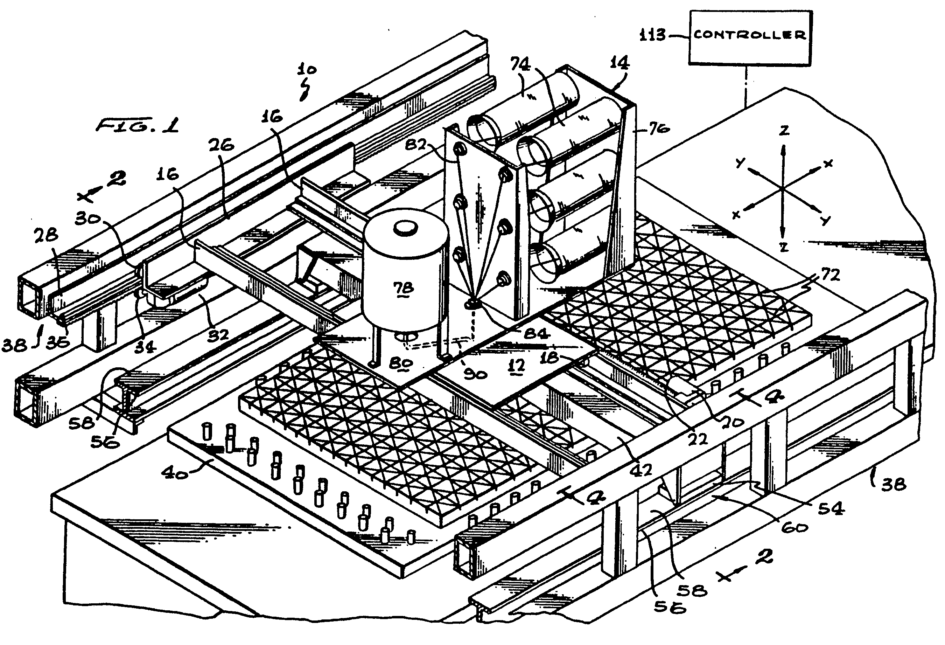

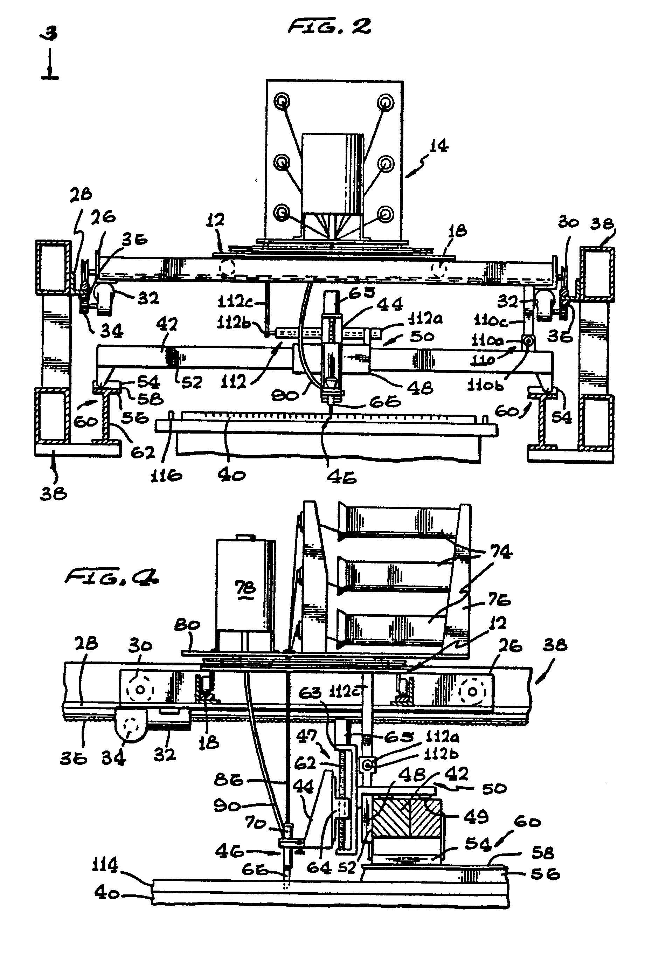

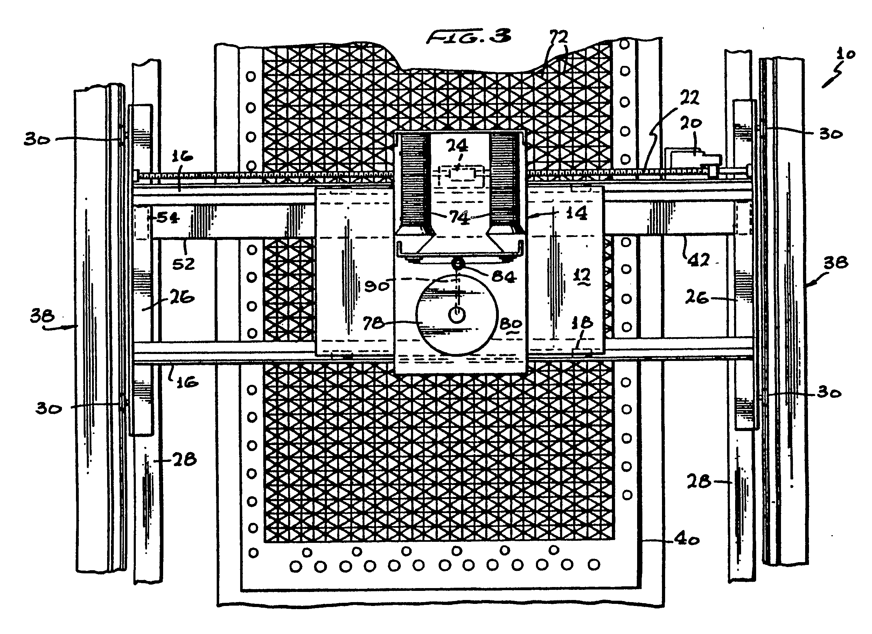

Referring now to Fig. 1, a perspective view of an automated fiber lay-up machine 10 of a preferred embodiment of the present invention is illustrated. The lay-up machine 10 has an upper carriage 12 to while is coupled a material handling system 14. The upper carriage 12, as shown also in Figs. 2 and 3, is mounted on a pair of rails 16 by means of rollers 18 and is driven in the Y-direction along rails 16 by motor 20 which rotates worm screw drive shaft 22 through worm screw drive nut 24 coupled to the upper carriage 12. Rails 16 are mounted on beams 26 which ride on beams 28 by means of rollers 30. Attached to the underside of beams 26 are motors 32 which drive gears 34 which engage the toothed undersurface 36 of beams 28 and thus propel upper carriage 12 in the X-direction. Beams 28 are coupled to a support structure 38 which carries beams 28 and upper carriage 12 a selected distance above the workbed or lay-up tool 40.

The lay-up machine 10 additionally has a beam 42 to which is coupled, as shown in Fig. 4, a lower carriage 44 for the fiber laying head 46, shown in Fig. 5., to enable the fiber laying head 46 to be driven in the X and Y directions. The lower carriage 44 is coupled to the beam 42 through support 47 attached to winding 48, supported by roller bearing 49, which forms the moving coil (rotor) of a linear induction motor 50; the beam 42 having a surface pattern 52 of conductive and non-conductive regions which forms the stator of the linear induction motor 50. Such a linear induction motor 50 is marketed by the Xynetics Company of Santa Clara, California and the principles of operation thereof are described in U.S. Patent No. Re. 27,436 to Sawyer. The linear induction motor 50 causes the lower carriage 44 to be moved rapidly and precisely in the Y direction. The beam 42 is coupled to windings 54 which are supported on air bearings by beams 56 which have a surface pattern 58 thereon of conductive and non-conductive regions. As above, the windings 54 and the beams 56 with the surface pattern 58 form the rotors and stators of linear induction motors 60 which cause the beam 42 and the lower carriage 44 to be moved rapidly and precisely in the X direction. The beams 56 are coupled to support structures 62 which carry the beams 56 and thus the lower carriage 44 a selected distance above the lay-up tool 40. The fiber laying head 46 is also adapted to be driven in the Z direction and is capable of rotary motion around the Z axis. Referring to Fig. 4, the fiber laying head 46 is coupled by the lower carriage 44 to worm screw drive shaft 62 supported by bracket 63 and worm screw drive nut 64, the drive shaft 62 being driven by motor 65 to drive fiber laying head 46 in the Z direction.

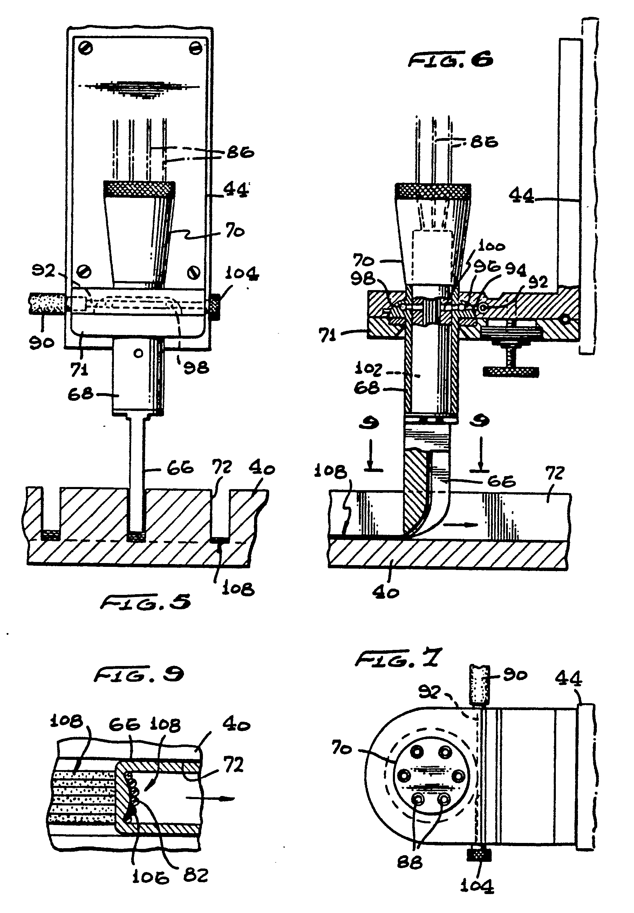

As is shown in Figs. 5-7, the fiber laying head 46 is supported by lower carriage 44 a selected distance above the lay-up tool 40. The fiber laying head 46 consists of a fiber laying nozzle 66 which slides inside of bearing member 68 and is threaded at its top portion to couple with cap 71. The bearing member 68 is held between the lower carriage 44 and plate 71 and has a limited degree of tilting motion to allow for variations in the slots 72 on the lay-up tool 40. The fiber laying nozzle 66 and the cap 70 can rotate within bearing member 68 to allow the fiber laying head 46 to be capable of rotary motion around the Z axis as far as the laying of the fibrous material is concerned.

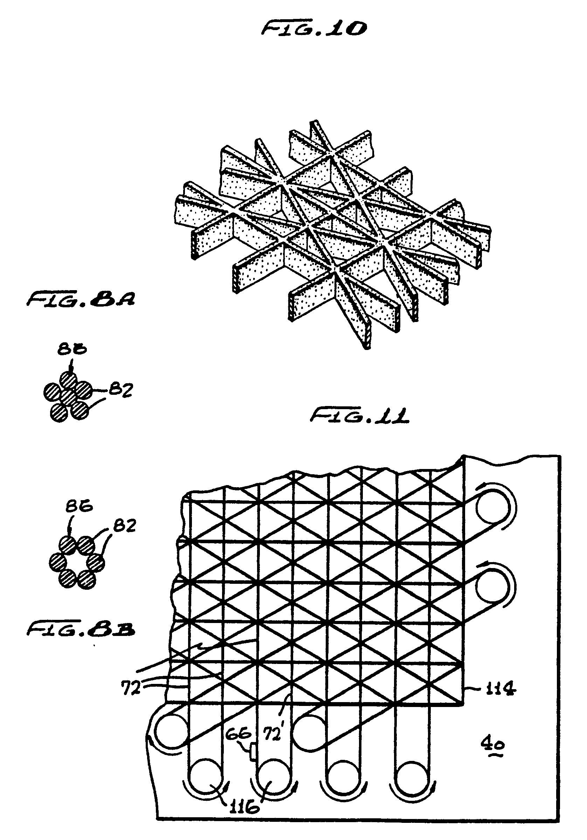

As is illustrated in Fig. 1, the material handing system 14 consists of a series of fiber spools 74 mounted in a fixture 76 and a resin pot 78, the fixture 76 and the resin pot 78 being carried by plate 80 coupled to upper carriage 12. The fibers 82 are guided through aperture 84 to the cap 70 shown in Fig. 5. As shown in Figs. 7, 8A and 8B, the fiber bundle 86 is separated by the apertures 88 in cap 70 into a regular (shown as hexagonal) pattern of fibers 82. The resin in the resin pot 78 is forced under pressure down tube 90 into a channel 92 in the lower carriage 44. The channel 92 communicates through aperature 94 with an aperture 96 in the bearing member 68. The bearing member 68 has a circular channel 98 on its inside surface coupled to the aperture 96. The fiber laying nozzle 66 has a plurality of apertures 100 which are contiguous to the channel 98 and allow resin to flow from the channel 92 through apertures 94, 96 into channel 98 and then into the hollow interior 102 of the fiber laying nozzle 66 to impregnate the fiber bundle 86. The resin flow is controlled by needle valve 104 which controls the effective size of the aperture 94. As shown in Fig. 9, the fiber laying nozzle 66 has a convex surface 106 over which the now resin impregnated fiber bundle 86 is passed to separate the fiber bundle 86 into a linear array 108 of fibers 82 which are then laid flat on the surface of the lay-up tool 40.

In operation, power is supplied to motors 20, 32, 50 and 60 to move upper carriage 12 and lower carriage 44, and thus the material handling system 14 and the fiber laying head 46, to the position where the fiber bundle 86 is to be laid on the lay-up tool 40. Transducers 110 and 112 are provided to control the application of power to motors 32 and 20, respectively, so that the upper carriage 12 is slaved to the movement of the lower carriage 44. Transducer 110 consists of a cylinder 110a affixed to the beam 42 and a rod 110b inserted in the cylinder 110a and affixed by member 110c to the beam 26 supporting the upper carriage 12. Any motion of the lower carriage 44 in the X-direction not accompanied by a like motion of the upper carriage 12 will cause a relative motion of the cylinder 110a and the rod 110b which will generate an output signal and cause motor 32 to be actuated. Similarly, transducer 112 consists of a cylinder 112a affixed to winding 48 of motor 50 and a rod 112b inserted in the cylinder 112a and spring loaded against member 112c affixed to the upper carriage 12. Any motion of the lower carriage 44 in the Y direction not accompanied by a like motion of the upper carriage 12 will cause a relative motion of the cylinder 112a and the rod 112b which will generate an output signal and cause motor 20 to be actuated.

Once the fiber laying head 46 is in position, it is then lowered to the surface of the lay-up tool 40 by activation of motor 65. The fiber laying head 46 is generally lowered in a direction substantially normal to a horizontal plane which is tangent to the surface of the lay-up tool 40 at the point of contact of the fiber laying nozzle 66 with the lay-up tool 40. Power is then selectively applied by a controller 113 to the above-cited motors so that the fiber bundle 86 can be laid in a selected pattern on the surface of the lay-up tool 40. The height of fiber laying head 46 in the Z direction is controlled to allow multiple layers of the fiber bundle 86 to be laid down when the fiber bundle 86 is laid down and also is crossed over itself in multiple passes to make reticulated structures, as illustrated in Fig. 10. The reticulated structure shown in Fig. 10 is made by positioning the fiber laying head 46 at a selected position on the lay-up tool 40 near the edge of the die 114, which has a matrix of slots 72 in it, and causing the fiber laying nozzle 66 to enter the slots 72 while laying the fiber bundle 86. At the end of a slot 72, as shown in Fig. 11, the nozzle 66 exits the slot 72 and is moved toward post 116. As the direction of the fiber laying head 46 carried by lower carriage 44 is changed by selective actuation of motors 50 and 60 to go around the post 116, the nozzle 66 interacts with the periphery of the post 116 which causes it to swivel around the Z axis and thus change direction to head back into slot 72'. By suitably positioning the posts 116 around the periphery of the die 114, the fiber bundle 86 can be laid in all the slots 72 a selected number of layers deep to produce the reticulated structure shown in Fig. 10. If it is desired, the motion around the Z axis of the fiber laying head 46 can be mechanized as shown in our copending European Patent application which claims priority from U.S. Serial No. 382,497, and the posts 116 can be eliminated. In addition, the upper carriage 12 can be eliminated for short passes since the fibers 82 and the tube 90 can be made long enough to reach and travel with the moving fiber laying head 46.

An automated fiber lay-up machine has thus been described in which the heavy and bulky fibrous material handling system has been disengaged from the fiber laying head. The fiber laying head which has a minimum of bulk and weight is carried by a rapid and accurate positioning and driving system and is fed fibrous material by the fibrous material handling system which is carried by a separate driving system slaved to the motion of the fiber laying head. With this description in mind, it is obvious that numerous modifications and departures may be made by those skilled in the art; thus, the invention is to be construed as being limited only by the scope of the appended claims.

The automated fiber lay-up machine is useful in the manufacture of reticulated composite structures.

## Claims

1. A fiber lay-up machine for laying up fibrous material on a lay-up tool (40) comprising:
supply means (14) for supplying said fibrous material (82), said supply means including a source of resin (78); fiber laying means (46) coupled to said supply means and adapted to lay down resin impregnated fibrous material on said tool (40); carriage means (12, 44) adapted to carry said supply means (14) and fiber laying means (46) and having a selected number of degrees of freedom of movement to control the positions of said supply means and said fiber laying means; and means (20, 32, 50, 60) for moving said carriage means; characterized in that the fiber laying means (46) has two degrees of freedom of transverse movement independent of said supply means (14).

2. A machine as claimed in Claim 1, comprising means (44, 47, 65) for moving said fiber laying means (46) in a direction substantially normal to a plane containing the said two degrees of freedom of transverse movement of the fiber laying means (46).

3. A machine as claimed in Claim 1, comprising means for moving said fiber laying means (46) in a direction substantially normal to a horizontal plane which is tangent to the surface of said lay-up tool (40).

4. A machine as claimed in Claim 1, wherein said fiber laying means (46) includes a fiber laying nozzle (66), said fiber laying nozzle being adapted to follow the contours of the lay-up tool (40).

5. A machine as claimed in Claim 4, comprising means for moving said fiber laying means (46) in a direction substantially normal to a horizontal plane which is tangent to the surface of said lay-up tool (40) at the point of contact of said fiber laying nozzle with said lay-up tool.

6. A machine as claimed in Claim 4 or 5, wherein said fiber laying nozzle (66) is adapted to lay said fibrous material down flat on said lay-up tool (40).

7. A machine as claimed in Claim 6, wherein said fiber laying nozzle (66) has a convex inner surface (106) over which said fibrous material is drawn prior to being laid down on said lay-up tool (40), said convexity extending substantially normal to the direction of motion of said fibrous material.

8. A machine as claimed in any one of Claims 4 to 7, wherein said lay-up tool (40) has a plurality of posts (116) positioned thereon, said posts being adapted to change the direction of said fiber laying nozzle upon contacting said fiber laying nozzle.

9. A machine as claimed in any preceding Claim, wherein said fiber laying means (46) has means (70, 90-102) to receive said fibrous material (82) and said resin separately and to bring said material and resin into contact with each other before said material is laid down.

10. A machine as claimed in any preceding Claim, wherein said carriage means comprises a first carriage (12) which carries said supply means (14) and a second carriage (44) which carries said fiber laying means (46), and wherein means (110, 112) are provided for slaving the motion of said first carriage (12) to the motion of said second carriage (44).

11. A machine as claimed in Claim 10, wherein said slaving means includes transducer means (110, 112) coupled to said second carriage (44) and said first carriage (12) for sensing the relative motion thereof and for generating an output signal in response to said relative motion to control said means (20, 32) for moving said first carriage (12).

12. A machine as claimed in any preceding Claim, which comprises controller means (113) for controlling movement of said carriage means (12, 44).

## Patentansprüche

1. Faserauflegemaschine zum Auflegen von faserförmigem Material auf ein Auflegewerkzeug (40) mit einer Zuführungseinrichtung (14) zur Zuführung des faserförmigen Materials (82), welche eine Harzquelle (78) enthält, eine an die Zuführungseinrichtung angekoppelte und zum Ablegen von mit Harz imprägnierten faserförmigen Material auf dem Werkzeug (40) dienenden Faserlegeeinrichtung (46), einer Führungseinrichtung (12, 44) zur Führung der Zuführungseinrichtung (14) und der Faserlegeeinrichtung (46) mit einer vorgegebenen Zahl von Bewegungsfreiheitsgraden zur Steuerung der Stellungen der Zuführungseinrichtung und der Faserlegeeinrichtung und mit einer Einrichtung (20, 32, 50, 60) zur Bewegung der Führungseinrichtung, dadurch gekennzeichnet, daß die Faserlegeeinrichtung (46) zwei von der Zuführungseinrichtung (14) unabhängige Querbewegungs-Freiheitsgrade besitzt.

2. Maschine nach Anspruch 1 mit einer Einrichtung (44, 47, 65) zur Bewegung der Faserlegeeinrichtung (46) in einer Richtung im wesentlichen senkrecht zu einer Ebene, welche die beiden Querbewegungs-Freiheitsgrade der Faserlegeeinrichtung (46) enthält.

3. Maschine nach Anspruch 1 mit einer Einrichtung zur Bewegung der Faserlegeeinrichtung (46) in einer Richtung im wesentlichen senkrecht zu einer Horizontalebene, welche eine Tangente an die Fläche des Auflegewerkzeuges (40) ist.

4. Maschine nach Anspruch 1, in der die Faserlegeeinrichtung (46) eine Faserlegedüse (66) aufweist, die den Konturen des Auflegewerkzeugs (40) zu folgen vermag.

5. Maschine nach Anspruch 4, mit einer Einrichtung zur Bewegung der Faserlegeeinrichtung (46) in einer Richtung im wesentlichen senkrecht zu einer Horizontalebene, welche eine Tangente an die Fläche des Auflegewerkzeugs (40) im Kontaktpunkt der Faserlegedüse mit dieser ist.

6. Maschine nach Anspruch 4 oder 5, in der die Faserlegedüse (66) zum ebenen Niederlegen des faserförmigen Materials auf dem Auflegewerkzeug (40) dient.

7. Maschine nach Anspruch 6, in der die Faserlegedüse (66) eine konvexe Innenfläche (106) aufweist, über die das faserförmige Material vor dem Niederlegen auf dem Auflegewerkzeug (40) gezogen wird, wobei die Erhabenheit im wesentlichen senkrecht zur Bewegungserichtung des faserförmigen Materials ausgerichtet ist.

8. Maschine nach den Ansprüchen 4 bis 7, in der das Auflegewerkzeug (40) eine Vielzahl von auf ihm angeordneten Zapfen (16) aufweist, die beim in Kontakttreten mit der Faserlegedüse zur Änderung von deren Richtung dienen.

9. Maschine nach den vorhergehenden Ansprüchen, in der die Faserlegeeinrichtung (46) Mittel (70, 90 bis 102) zur getrennten Aufnahme des faserförmigen Materials (82) und des Harzes sowie zum in Kontaktbringen des Materials und des Harzes miteinander vor dem Niederlegen des Materials aufweist.

10. Maschine nach den vorhergehenden Ansprüchen, in der die Führungseinrichtung eine erste die Zuführungseinrichtung (14) führende Führung (12) und eine zweite die Faserlegeeinrichtung (46) führende Führung (44) aufweist und in der Mittel (110, 112) vorgesehen sind, um die Bewegung der ersten Führung (12) an die Bewegung der zweiten Führung (44) zu binden.

11. Maschine nach Anspruch 10, in der die Bewegungsbindemittel an die zweite Führung (44) und die erste Führung (12) angekoppelte Wandlermittel (110, 112) zur Erfassung von deren Relativbewegung und zur Erzeugung eines Ausgangssignals als Funktion der Relativbewegung zwecks Steuerung der Einrichtung (20, 32) zur Bewegung der ersten Führung (12) enthalten.

12. Maschine nach den vorhergehenden Ansprüchen mit einer Steuereinrichtung (113) zur Steuerung der Bewegung der Führungen (12, 44).

**Revendications**

1. Machine d'application de fibres pour appliquer un matériau fibreux sur un outil d'application (40), comprenant:

des moyens d'alimentation (14) pour alimenter ledit matériau fibreux (82), lesdits moyens d'alimentation comprenant une source de résine (78); des moyens d'application de fibres (46) accouplés auxdits moyens d'alimentation et adaptés à déposer le matériau fibreux imprégné de résine sur ledit outil (40); des moyens à chariots (12, 44) adaptés à transporter lesdits moyens d'alimentation (14) et lesdits moyens d'application de fibres (46) et comprenant un nombre sélectionné de libertésde mouvement pour commander les positions desdits moyens d'alimentation et desdits moyens d'application de fibres; et des moyens (20, 32, 50, 60) pour déplacer lesdits moyens à chariots; caractérisée en ce que les moyens d'application de fibres (46) disposent de deux degrés de liberté de mouvement transversal indépendamment desdits moyens d'alimentation (14).

2. Machine selon la revendication 1, comprenant des moyens (44, 47, 65) pour déplacer lesdits moyens d'application de fibres (46) dans une direction sensiblement normale à un plan contenant lesdits deux degrés de liberté de mouvement transversal des moyens d'application de fibres (46).

3. Machine selon la revendication 1, comprenant des moyens pour déplacer lesdits moyens d'application de fibres (46) dans une direction sensiblement normale à un plan horizontal qui est tangent à la surface dudit outil d'application (40).

4. Machine selon la revendication 1, dans laquelle lesdits moyens d'application de fibres (46) comprennent une buse d'application de fibres (66) adaptée à suivre les contours de l'outil d'application (40).

5. Machine selon la revendication 4, comprenant des moyens pour déplacer lesdits moyens d'application de fibres (46) dans une direction sensiblement normale à un plan horizontal qui est tangent à la surface dudit outil d'application (40) au point de contact entre ladite buse d'application de fibres et ledit outil d'application.

6. Machine selon la revendication 4 ou 5, dans laquelle ladite buse d'application de fibres (66) est adaptée à déposer ledit matériau fibreux à plat sur ledit outil d'application (40).

7. Machine selon la revendication 6, dans laquelle ladite buse d'application de fibres (66) comprend une surface interne convexe (106) sur laquelle est aspiré ledit matériau fibreux avant d'être déposé sur ledit outil d'application (40), ladite convexité s'étendant sensiblement normalement à la direction du mouvement dudit matériau fibreux.

8. Machine selon l'une quelconque des revendications 4 à 7, dans laquelle ledit outil d'application (40) comprend plusieurs colonnes (116) positionnées sur lui, lesdites colonnes étant adaptées à modifier la direction de ladite buse d'application de fibres quand elles viennent en contact avec elle.

9. Machine selon l'une quelconque des revendications précédentes, dans laquelle lesdits moyens d'application de fibres (46) comprennent des moyens (70, 90-102) pour recevoir ledit matériau fibreux (82) et ladite résine séparément; et pour amener ledit matériau et ladite résine en contact mutuel avant que ledit matériau soit déposé.

10. Machine selon l'une quelconque des revendications précédentes, dans laquelle lesdits moyens à chariots comprennent un premier chariot (12) qui supporte lesdits moyens d'alimentation (14) et un second chariot (44) qui supporte lesdits moyens d'application de fibres (46), et dans laquelle des moyens (110, 112) sont prévus pour asservir le mouvement de premier chariot (12) au mouvement dudit second chariot (44).

11. Machine selon la revendication 10, dans laquelle lesdits moyens d'asservissement comprennent des moyens à transducteurs (110, 112) accouplés audit second chariot (44) et ledit premier chariot (12) pouvant détecter leur mouvement relatif et générer un signal de sortie en réponse audit mouvement relatif, pour commander lesdits moyens (20, 32) et déplacer ledit premier chariot (12).

12. Machine selon l'une quelconque des revendications précédentes, qui comprend des moyens de commande (113) pour commander le mouvement desdits moyens à chariots (12, 44).

FIG. 1

FIG. 2

FIG. 4

FIG. 3

FIG. 6

FIG. 5

FIG. 9

FIG. 7

4

*FIG.10*

*FIG.8A*

85
82

*FIG.11*

85
82

*FIG.8B*

72

66  72'

114

40

116